# EUROPEAN PATENT APPLICATION

(11) **EP 1 438 927 A1**
(43) Date of publication of application: **21.07.2004**
(21) Application number: 03022969.4
(22) Date of filing: 09.10.2003
(51) Int. Cl.: A61C 13/15, A61C 1/18

(54) **Polymerizing lamp for polymerizing dental compounds**

(30) Priority: 17.01.2003 IT BO20030021
(71) Applicant: CEFLA SOC. COOP. A R.L., I-40026 Imola, Bologna (IT)
(72) Inventor: Nanni, Eros, 40023 Castel Guelfo di Bologna (IT); Landi, Leo, 40026 Imola (IT)
(74) Representative: Jorio, Paolo

(57) **Abstract**

In a polymerizing lamp for polymerizing dental compounds, an optical device (7) for polymerizing the compounds and a logic control device (40) for controlling the optical device (7) are housed inside respective supporting members (3, 4), which are connected to each other by a cylindrical joint (36) so as to be movable with respect to each other between at least two operating positions.

## Description

The present invention relates to a polymerizing lamp for polymerizing dental compounds.

In dentistry, a compound with a photopolymerizable resin base is applied to dental prostheses in the semifluid state, and is stabilized by a polymerization process initiated by irradiating the compound with light in the 400 to 540 nm wavelength range, i.e. so-called "blue light".

The polymerization process is initiated by a polymerizing lamp of the type comprising optical means for polymerizing dental compounds; logic control means for selectively controlling the optical means; and a supporting member supporting the optical and logic control means.

The supporting member normally comprises two tubular bodies, which have respective longitudinal axes, house the optical means and logic control means respectively, and are connected to each other by a connecting device designed to permit only one fixed assembly position of the tubular bodies, in which the respective longitudinal axes are either substantially parallel or form a given angle with respect to each other.

As a result, known polymerizing lamps of the type described above are unsatisfactory ergonomically and in terms of versatility, and cannot be used correctly for all the teeth in the dental arch.

It is an object of the present invention to provide a polymerizing lamp for polymerizing dental compounds, and which provides for eliminating the aforementioned drawbacks.

According to the present invention, there is provided a polymerizing lamp for polymerizing dental compounds, the polymerizing lamp comprising optical means for polymerizing said compounds; logic control means for selectively controlling said optical means; and a supporting member for supporting said optical means and said logic control means; the supporting member comprising two bodies, and connecting means for connecting the bodies to each other; and the polymerizing lamp being characterized in that said connecting means comprise joint means enabling said bodies to move with respect to each other between at least two operating positions.

A non-limiting embodiment of the present invention will be described by way of example with reference to the accompanying drawings, in which:
Figures 1 and 2 show two schematic side views of a preferred embodiment of the polymerizing lamp according to the present invention in two different operating positions;
Figure 3 shows a larger-scale side view, with parts in section and parts removed for clarity, of the polymerizing lamp in Figures 1 and 2.

Number 1 in the accompanying drawings indicates as a whole a polymerizing lamp for polymerizing dental compounds by irradiating the compounds with light in the 400 to 540 nm wavelength range, i.e. so-called "blue light".

Lamp 1 comprises a supporting member 2, in turn comprising two housing bodies 3 and 4, and a connecting device 5 for connecting bodies 3 and 4 to each other. Body 3 is a tubular, substantially truncated-cone-shaped body having a longitudinal axis 6 and supporting an optical device 7 for polymerizing dental compounds.

Device 7 has a light source 8 comprising a supporting plate 9 housed inside body 3 crosswise to axis 6, and a high-power, blue-light LED 10 fitted to plate 9 and substantially coaxial with axis 6. In a variation not shown, source 8 is replaced with a so-called organic LED light source, which comprises two conducting electrodes - one of which made of transparent material - and an organic material located between the electrodes and which emits blue light when electric current flows between the electrodes.

Device 7 also comprises a known output optical fibre 11 designed to direct the blue light from source 8 towards the patient's oral cavity, and connected to one end of body 3 by a known fastening device 12; and a known optical coupling member 13, which is interposed between LED 10 and optical fibre 11, is housed inside body 3, substantially coaxial with axis 6, and is made of synthetic material transparent to the light emitted by LED 10 to ensure correct optical coupling of optical fibre 11 and LED 10.

At the opposite end to that fitted with optical fibre 11, body 3 is bounded by a substantially flat lateral surface 14 sloping with respect to axis 6, and comprises a substantially cylindrical cavity 15, which opens out at surface 14, has a bottom wall 16 substantially parallel to surface 14, and has a longitudinal axis 17 substantially perpendicular to surface 14 and forming an angle a of other than 0° and 90° with axis 6.

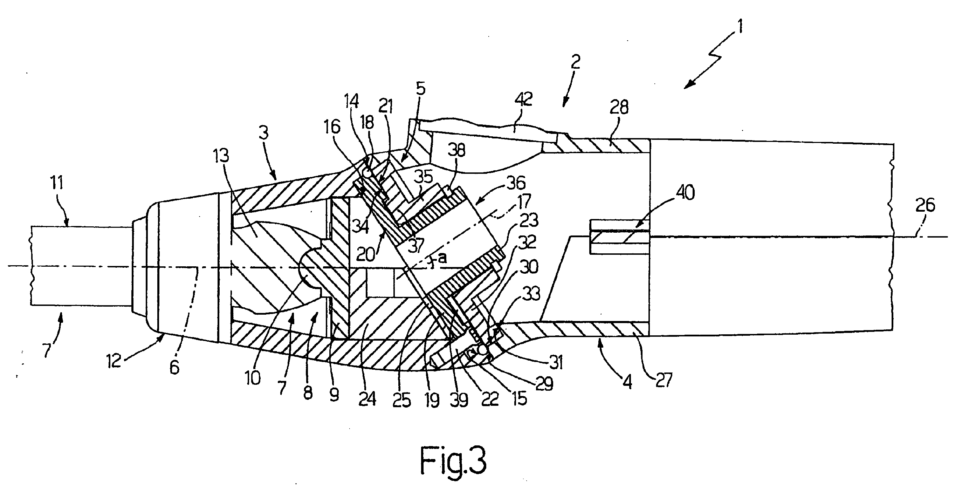

With the interposition of a sealing ring 18 coaxial with axis 17, cavity 15 is engaged in rotary and axially sliding manner by an annular plate 19, which is coaxial with axis 17, is bounded axially by two flat surfaces 20, 21 perpendicular to axis 17 - surface 20 being positioned contacting wall 16, and surface 21 being substantially coplanar with surface 14 - and is fixed against wall 16 by a number of screws 22 (only one shown in Figure 3) parallel to and arranged about axis 17.

Plate 19 has a cylindrical sleeve 23 projecting, coaxially with axis 17, from surface 21 and forming part of connecting device 5 connecting bodies 3 and 4.

It should be pointed out that body 3 also houses a spacer 24 located between plates 9 and 19 and contacting plate 9 to dissipate the heat generated by LED 10; a substantially flat seal 25 perpendicular to axis 17 and fitted between plate 19 and spacer 24; and a temperature sensor (not shown) for controlling the temperature of body 3.

Body 4 is a tubular body, which defines a grip of lamp 1, has a longitudinal axis 26, and is defined by two substantially semicylindrical shells 27, 28 connected to each other in known manner. Body 4 is bounded at the free end by a flat lateral surface 29 parallel to and facing surface 14, and comprises a substantially cylindrical cavity 30, which opens out at surface 29, is coaxial with axis 17, and has a bottom wall 31 substantially parallel to surface 29.

Cavity 30 is engaged in angularly and axially fixed manner by an annular plate 32, which is coaxial with axis 17 and bounded axially by two flat surfaces 33, 34 perpendicular to axis 17, and of which surface 33 is positioned contacting wall 31, and surface 34 is substantially coplanar with surface 29.

Plate 32 has a cylindrical sleeve 35 projecting, coaxially with axis 17, from surface 33 and engaged in rotary and axially sliding manner by sleeve 23 to define, together with sleeve 23, a cylindrical joint 36 forming part of connecting device 5 connecting bodies 3 and 4.

Sleeves 23 and 35 are locked angularly with respect to each other by a tooth 37, which projects axially from surface 34, and, by means of a retaining ring 38 coaxial with axis 17 and sleeve 23, normally engages one of a number of recesses 39 formed on surface 21 and arranged about axis 17. Tooth 37 is expelled from relative recess 39, in opposition to ring 38, by moving bodies 3 and 4 with respect to each other about axis 17.

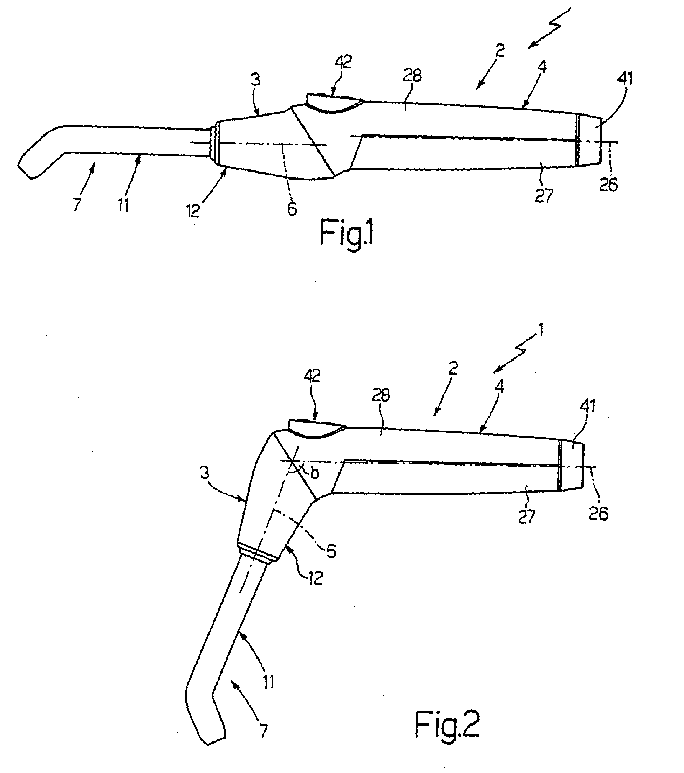

Connecting device 5 thus provides for moving bodies 3 and 4, with respect to each other and about axis 17, between an operating position (Figure 1) in which axes 6 and 26 are substantially parallel, and a number of further operating positions (Figure 2), each defined by tooth 37 engaging one of recesses 39, in which axes 6 and 26 form an angle b of other than 0°. As such, lamp 1 is highly versatile and ergonomic, and can be used correctly for all the teeth in the dental arch.

Body 4 supports a known electronic control device 40 (shown schematically in Figure 3) for selectively controlling operation of optical device 7, and which is connected electrically to a dental unit (not shown) by an electric connecting device (not shown) housed inside an end cap 41 of body 4.

Device 40 comprises a rectifying circuit (not shown) for rectifying and filtering the supply voltage of lamp 1 to permit supply of lamp 1 by both direct and alternating voltage sources; a switch supply circuit (not shown) for stabilizing the supply voltage rectified and filtered by the rectifying circuit (not shown), to ensure correct operation of device 40 and LED 10; a supply voltage measuring circuit (not shown); and a control circuit (not shown), which is connected electrically to said temperature sensor (not shown) and to LED 10 by an electric cable (not shown), is connected electrically to the above circuits, and is user-activated selectively by means of a control keyboard 42, which is fitted to shell 28, provides for on-off control of lamp 1 and for selecting the operating modes stored in said control circuit (not shown), and may also be provided with acoustic and/or light indicator devices.

In a variation not shown, the device (not shown) connecting lamp 1 electrically to the dental unit (not shown) is replaced by a battery housed inside body 4 to permit independent electric supply of lamp 1.

Operation of lamp 1 is easily deducible from the above description, with no further explanation required.

## Claims

1. A polymerizing lamp for polymerizing dental compounds, the polymerizing lamp comprising optical means (7) for polymerizing said compounds; logic control means (40) for selectively controlling said optical means (7); and a supporting member (2) for supporting said optical means (7) and said logic control means (40); the supporting member (2) comprising two bodies (3, 4), and connecting means (5) for connecting the bodies (3, 4) to each other; and the polymerizing lamp being **characterized in that** said connecting means (5) comprise joint means (36) enabling said bodies (3, 4) to move with respect to each other between at least two operating positions.

2. A polymerizing lamp as claimed in Claim 1, wherein said bodies (3, 4) have respective longitudinal axes (6, 26), which are substantially parallel to each other when said bodies (3, 4) are in a first of said operating positions, and which form an angle (b) of other than 0° when said bodies (3, 4) are in a second of said operating positions.

3. A polymerizing lamp as claimed in Claim 2, wherein one of said bodies (3, 4) comprises a seat (35) having a given further longitudinal axis (17), and the other of said bodies (3, 4) comprises a shank (23) inserted inside said seat (35), connected in rotary and axially sliding manner to the seat (35), and defining, together with the seat (35), said joint means (36).

4. A polymerizing lamp as claimed in Claim 4, wherein each said axis (6, 26) forms a further angle (a) of other than 0° with said further axis (17).

5. A polymerizing lamp as claimed in Claim 3 or 4, wherein said connecting means (5) comprise retaining means (37, 38, 39) for making said shank (23) and said seat (35) angularly integral with each other.

6. A polymerizing lamp as claimed in Claim 5, wherein said bodies (3, 4) comprise respective end faces (21, 34) facing each other and substantially perpendicular to said further axis (17); said retaining means (37, 38, 39) comprising at last two recesses (39) formed on a first said face (21), at least one tooth (37) formed on a second said face (34) and movable to and from a retaining position wherein the tooth (37) engages a said recess (39), and elastic thrust means (38) acting on said tooth (37) to keep the tooth (37) normally in said retaining position.

7. A polymerizing lamp as claimed in any one of the foregoing Claims, wherein said optical means (7) are housed inside a first said body (3), and said logic control means (40) are housed inside a second said body (4).

8. A polymerizing lamp as claimed in any one of the foregoing Claims, wherein said optical means (7) comprise a light source (8) in turn comprising at least one LED (10) for emitting blue light in the 400 nm to 540 nm wavelength range.

9. A polymerizing lamp as claimed in any one of Claims 1 to 7, wherein said optical means (7) comprise a light source (8) in turn comprising at least one so-called organic LED comprising two conducting electrodes and an organic material located between the electrodes, and for emitting blue light in the 400 nm to 540 nm wavelength range when electric current flows between the electrodes.

10. A polymerizing lamp as claimed in Claim 8 or 9, wherein said optical means (7) also comprise an output optical fibre (11) for directing the light from said light source (8) towards the oral cavity of a patient; and an optical coupling device (13) interposed between the light source (8) and the optical fibre (11).

11. A polymerizing lamp as claimed in any one of the foregoing Claims, and also comprising electric connecting means for connecting the polymerizing lamp to a dental unit.

12. A polymerizing lamp as claimed in any one of Claims 1 to 10, and also comprising a battery for electrically powering the polymerizing lamp.
